# EUROPEAN PATENT SPECIFICATION

(11) **EP 2 249 232 B1**
(45) Date of publication and mention of the grant of the patent: **05.04.2017**
(21) Application number: 10001120.4
(22) Date of filing: 03.02.2010
(51) Int. Cl.: G06F 3/0338, G06F 3/042, G06F 3/0354

(54) **Cursor control device**
Cursorsteuerungsvorrichtung
Dispositif de contrôle du curseur

(30) Priority: 05.05.2009 TW 98207649 U
(43) Date of publication of application: 10.11.2010
(73) Proprietor: Contour Design, Inc., Windham, NH 03087 (US)
(72) Inventor: Chiang, Hsiao-Long, Wan-Hua District Taipei City (TW)
(74) Representative: Ström & Gulliksson AB

(56) References cited:
- US-A1- 2008 278 444
- US-B1- 6 404 415
- US-B1- 6 633 277

## Description

### BACKGROUND OF THE INVENTION

### 1. Filed of the Invention :

The present invention relates to cursor control technology and more particularly, to a cursor control device formed of a hollow elongated circular module holder, a sleeve sleeved onto the circular module holder and axially slidable and transversely rotatable by the user and a circuit module mounted in the circular module holder for sensing the direction and movement of the sleeve and outputting a control signal to control a cursor on a display screen of an external electronic device.

### 2. Description of the Related Art :

Following fast development of modem technology and the electronic industry, many kinds of consumer electronics, such as computer, mobile telephone, digital camera, personal digital assistant and etc., have entered into our daily life. Further, following popularization of network, people may use the internet to search for information on the World Wide Web. Through the internet, people can watch online favorite movies, TV shows, cartoons, music videos and much more. Through the internet, people can also play web games and online games, send e-mails, go online shopping, make a subscription or online payment, or transfer money.

Further, a computer has multiple functions, bringing convenience to the user. Further, a computer may be equipped with a keyboard and/or mouse for controlling a cursor on a display screen. When operating a computer mouse, a user may rest the wrist of the hand on the desk or a mouse pad and then move the computer mouse or click the button of the computer mouse with the fingers. However, when going to move the computer mouse over a big area, the user must lift the wrist from the desk or mouse pad. Excessive or improper use of a computer may cause pain in the wrist (the so-called carpal tunnel syndrome). In order to eliminate this problem, wrist rests are created. A wrist rest is a device used to support the wrist while typing or when using a computer mouse. However, leaning the wrists on a wrist rest for long periods can put a lot of pressure on the undersides of the wrists. This may cause carpal tunnel syndrome to develop. Actually, a wrist rest does help align the user's hands and wrists while mousing. Further, an improperly used wrist rest may actually cause more repetitive stress injuries for those who mouse for extended periods of time.

Therefore, it is desirable to provide an orthopedically engineered cursor control device that eliminates the aforesaid problems. So far, there have been developed a variety of input control means which can be operated with alleviated burden of the user's wrist. Examples can be referred to US Patent No. 6,633,277 B1, US Patent No. 6,404,415 B1, and US Patent Publication No. 2008/0278444 A1. In the above-mentioned patent disclosures, input control is executed by way of sliding or rotating a roller instead of a mouse. In spite the prior art means has improved using experiences, better control performance is still a demand.

### SUMMARY OF THE INVENTION

The present invention has been accomplished under the circumstances in view. It is one object of the present invention to provide a cursor control device, which is orthopedically engineered for comfortable use to control a cursor on a display screen of an electronic device. It is another object of the present invention to provide a cursor control device, which produces less friction during operation, assuring operating stability.

These and other objects of the present invention are achieved by a cursor control device according to claim 1. According to further aspects of the present invention, the cursor control device comprises a hollow elongated circuit module holder having a top opening, a sleeve sleeved onto the circuit module holder and movable leftwards and rightwards and rotatable forwards and backwards relative to the circuit module without friction and a circuit module accommodated in the circuit module holder and adapted for sensing the direction and amount of movement of the sleeve relative to the circuit module holder and producing a signal indicative of the direction and amount of movement of the sleeve relative to the circuit module holder for controlling a cursor on a display screen of an electronic device to grab a web page and to scroll up or down the web page or to click a menu selection. Further, the circuit module comprises a control switch, which produces a triggering signal when the user presses the sleeve.

Further, the circuit module holder is made from a self-lubricating material, facilitating movement of the sleeve. Therefore, the sleeve can be moved smoothly relative to the circular module holder without causing much friction resistance.

Further, the circuit module holder is formed of a first holder shell and a second holder shell. Further, the circuit module is accommodated in the second holder shell and affixed to the second holder shell. Because the circuit module is protected inside the circular module holder and does not require any extra installation space in the electronic device, the cursor control device has an integrated outer appearance and a small-size characteristic.

### BRIEF DESCRIPTION OF THE DRAWINGS

FIG. 1 is a perspective view of a cursor control device in accordance with the present invention.
FIG. 2 is an exploded view of a part of the cursor control device in accordance with the present invention.
FIG. 3 is an exploded view of the cursor control device in accordance with the present invention.
FIG. 4 is a schematic drawing showing a status of use of the cursor control device in accordance with the present invention.
FIG. 5 is a sectional side view of the cursor control device in accordance with the present invention, showing movement of the sleeve in X-axis direction relative to the circuit module holder.
FIG. 6 is a sectional side view of the cursor control device in accordance with the present invention, showing axial movement of the sleeve in Y-axis direction relative to the circuit module holder.
FIG. 7 is a sectional side view of the cursor control device in accordance with the present invention, showing the sleeve pressed downwards relative to the circuit module holder.
FIG. 8 is a schematic sectional view of an alternate form of the cursor control device in accordance with the present invention.

### DETAILED DESCRIPTION OF THE PREFERRED EMBODIMENT

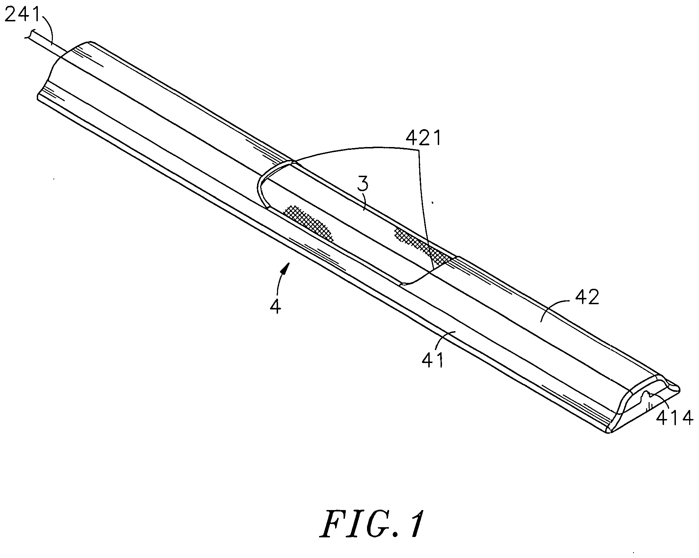

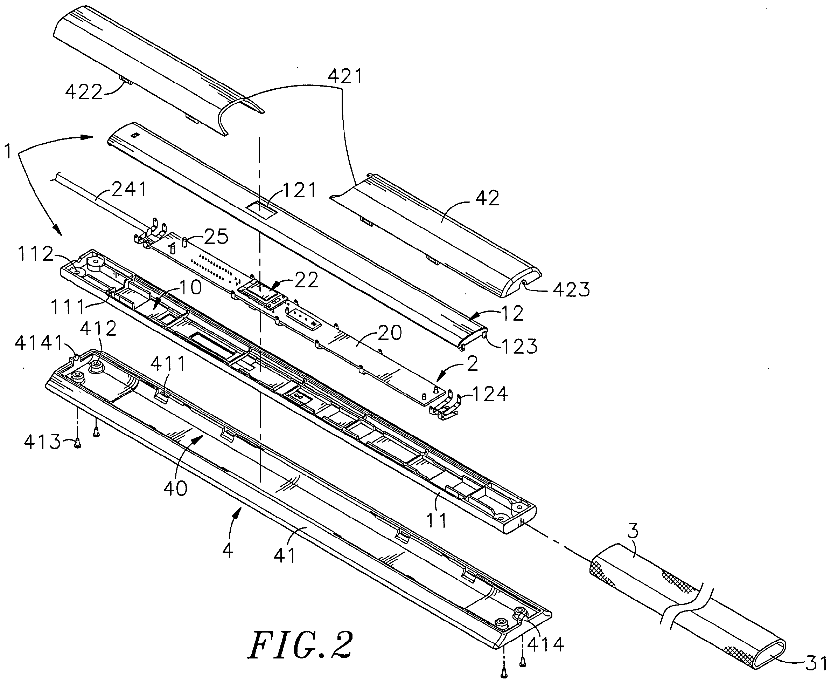

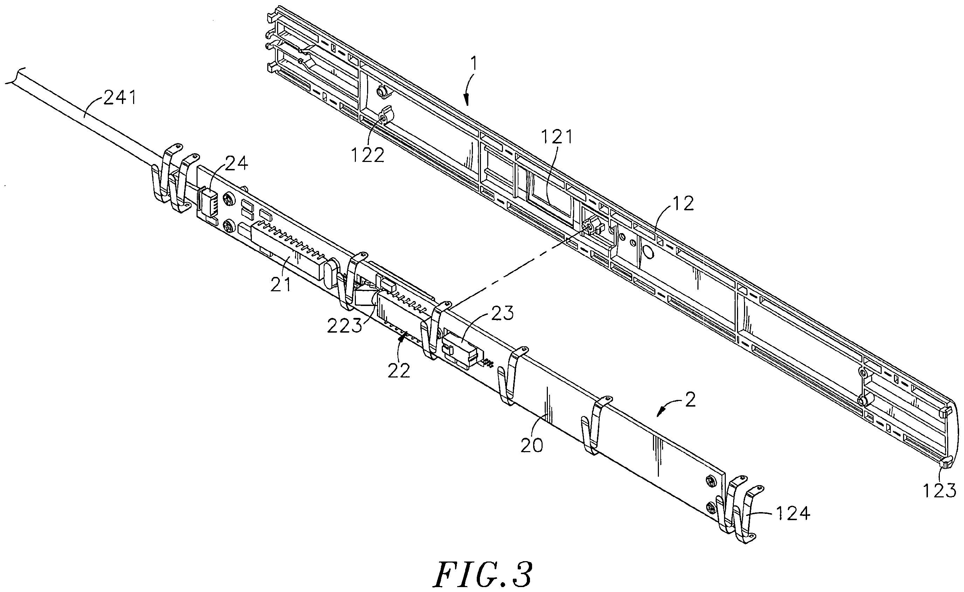

Referring to FIGS. 1, 2 and 3, a cursor control device in accordance with the present invention is shown comprising a circuit module holder 1, a circuit module 2, a sleeve 3 and a housing 4.

The circuit module holder 1 comprises a first holder shell 11 and a second holder shell 12. The first holder shell 11 and the second holder shell 12 define there between an accommodation space 10. The first holder shell 11 has a plurality of limiters 111 symmetrically disposed, for example, near two distal ends thereof at two opposite lateral sides relative to the accommodation space 10 and a plurality of locating members 112 symmetrically located on the two distal ends. The second holder shell 12 has an opening 121 cut through the top and bottom walls thereof in communication with the accommodation space 10, a plurality of mounting portions 122 protruded from the bottom wall and a plurality of stop members 123 corresponding to the limiters 111 of the first holder shell 11. Further, elastic members 124 are respectively fastened to the bottom wall of the second holder shell 12 and stopped against the first holder shell 11 to support the second holder shell 12 above the first holder shell 11.

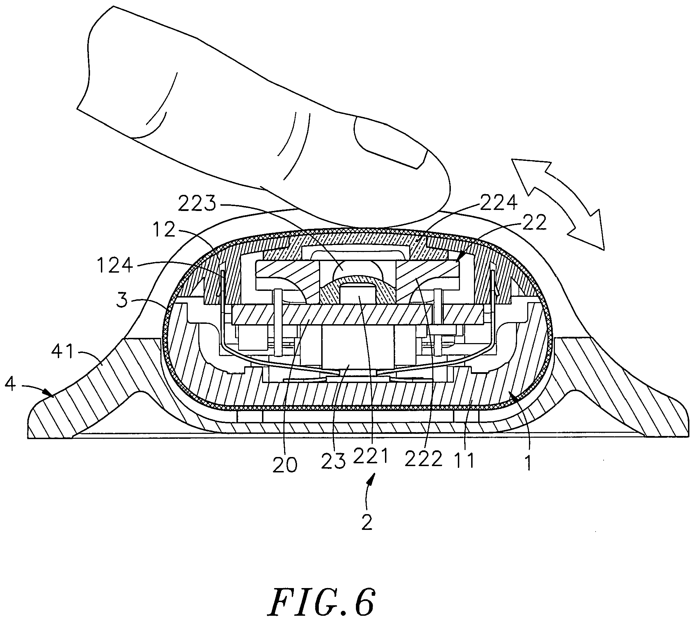

The circuit module 2 is accommodated in the accommodation space 10 in the circuit module holder 1, comprising a circuit board 20 carrying a microprocessor 21, a sensor module 22, a control switch 23 and a transmission interface 24. The circuit board 20 has a plurality of mounting portions 25 respectively fixedly fastened to the mounting portions 122 of the second holder shell 12 of the circuit module holder 1. The sensor module 22, the control switch 23 and the transmission interface 24 are respectively electrically connected to the microprocessor 21. The sensor module 22 is disposed corresponding to the opening 121 of the second holder shell 12 of the circuit module holder 1 for detecting the direction and amount of movement of the sleeve 3 relative to the circuit module holder 1. The transmission interface 24 is adapted for communication with communication interface means of an external computer (not shown). Further, the sensor module 22 comprises a substrate 222, a light source 223 mounted in the substrate 222, a lens 224 molded on the substrate 222 over the light source 223 and inserted into the opening 121 of the second holder shell 12 of the circuit module holder 1 in flush with the top wall of the second holder shell 12 (see FIG. 6) and a sensor 221 installed in the substrate 222 for sensing reflected light from the sleeve 3 upon radiation of the light emitted by the light source 223 through the lens 224.

The sleeve 3 defines an axial hole 31. By means of the axial hole 31, the sleeve 3 is mounted around the circuit module holder 1 and can be moved axially back and forth relative to the circuit module holder 1 and rotated around the circuit module holder 1.

The housing 4 comprises a bottom shell 41 and at least one, for example, two top cover shells 42. The two top cover shells 42 are covered on the top side of the bottom shell 41 such that an accommodation chamber 40 is defined in between the bottom shell 41 and the top cover shells 42 for accommodating the assembly of the sleeve 3, the circuit module holder 1 and the circuit module 2. The bottom shell 41 has a plurality of male hook members (or female hook members) 411 symmetrically disposed at two opposite lateral sides, a plurality of locating members 412 symmetrically disposed near two distal ends thereof and respectively fastened to the locating members 112 of the first holder shell 11 by fastening members 413, two protruding blocks 414 respectively located on the two distal ends. Further, an open space 421 is defined between the two top cover shells 42 corresponding to the opening 121 of the second holder shell 12 of the circuit module holder 1. Further, the two top cover shells 42 have a substantially -shaped cross section. Further, each top cover shell 42 has a plurality of female hook members (or male hook members) 422 respectively fastened to the male hook members (or female hook members) 411 of the bottom shell 41 and a locating groove 423 coupled to one of the two protruding blocks 414 of the bottom shell 41.

According to the present preferred embodiment, the circuit module holder 1 is formed of the first holder shell 11 and the second holder shell 12. Alternatively, the circuit module holder 1 can be a single-piece hollow bar having a circular or oval cross section allowing rotation and reciprocating displacement of the sleeve 3 therein. Further, the circuit module holder 1 can be made from polyoxymetylene (POM), polytetrafluoroethylene (PTFE), ultra high molecular weight polyethylene (UHMWPE) or any of a variety of other suitable self-lubricating materials. Further, the sensor module 22 of the circuit module 2 detects the direction and amount of movement of the sleeve 3 in such a manner that the light source 223 emits light through the lens 224 onto the sleeve 3. When the light emitted by the light source 223 falls upon a part of the sleeve 3, the surface characteristic (such as color, raised portions, recessed portions, smoothness) of the radiated part of the sleeve 3 interferes with light, causing a reflected light having a different characteristic to be produced. The sensor 221 senses the reflected light from the sleeve 3 and provides a corresponding signal to the microprocessor 21 for enabling the microprocessor 21 to calculate the direction (in X-axis and Y-axis) and amount of movement of the sleeve 3 relative to the circuit module holder 1 and to produce an output signal indicative of the direction and amount of movement of the sleeve 3 relative to the circuit module holder 1 for transmission through a transmission line 241 of the transmission interface 24 that extends through a hole 4141 on one protruding block 414 of the bottom shell 41 to the communication interface means of the external computer to control movement of a cursor on a display screen (not shown) that is electrically connected to the external computer. The technique how the sensor module 22 of the circuit module 2 emits light and detest reflected light for enabling the microprocessor 21 to calculate the direction and amount of movement of the sleeve 3 is of the known art and not within the scope of the claims of the present invention, and therefore no further detailed description in this regard is necessary. Further, the transmission interface 24 can be a USB, PS2 or any of a variety of other wired communication interfaces. Alternatively, the transmission interface 24 can be infrared, Bluetooth, radio frequency, or any other wireless communication interface. Further, the sleeve 3 can be made from mesh fabric, nonwoven fabric, plastics, rubber or leather, having transversely and longitudinally aligned recessed portions, raised portions or dots and coated with a layer of silver powder or silver paint for enabling the sensor motor 22 to sense the direction and amount of movement of the sleeve 3 relative to the circuit module holder 1 accurately.

During assembly of the cursor control device, the circuit module 2 is accommodated in the accommodation space 10 in the circuit module holder 1, and then the mounting portions 25 of the circuit board 20 are respectively fixedly fastened to the mounting portions 122 of the second holder shell 12 of the circuit module holder 1 to have the light source 223 be inserted into the opening 121 of the second holder shell 12 of the circuit module holder 1 and kept in flush with the top wall of the second holder shell 12. At this time, the stop members 123 of the second holder shell 12 are respectively aimed at the limiters 111 of the first holder shell 11, and the elastic members 124 of the second holder shell 12 are supported on the first holder shell 11. Thereafter, the sleeve 3 is sleeved onto the circuit module holder 1 over the opening 121 to have the circuit module holder 1 be received in the axial hole 31 of the sleeve 3. Thereafter, the sleeve 3 with the circuit module holder 1 are put in the accommodation chamber 40 inside the housing 4, and then the locating members 412 of the bottom shell 41 are respectively fastened to the locating members 112 of the first holder shell 11 by respective fastening members 413 to have the female hook members (or male hook members) 422 and locating groove 423 of the top cover shell 42 be respectively fastened to the male hook members (or female hook members) 411 and protruding blocks 414 of the bottom shell 41. Thus, the cursor control device is well assembled.

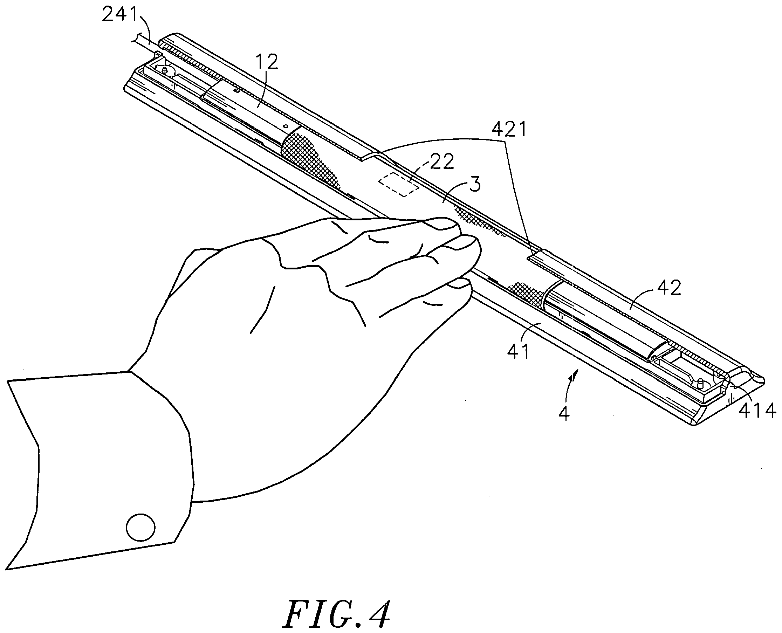

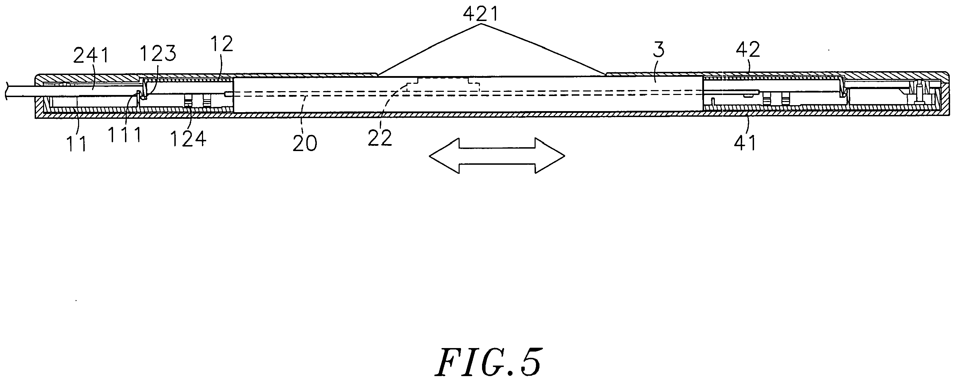

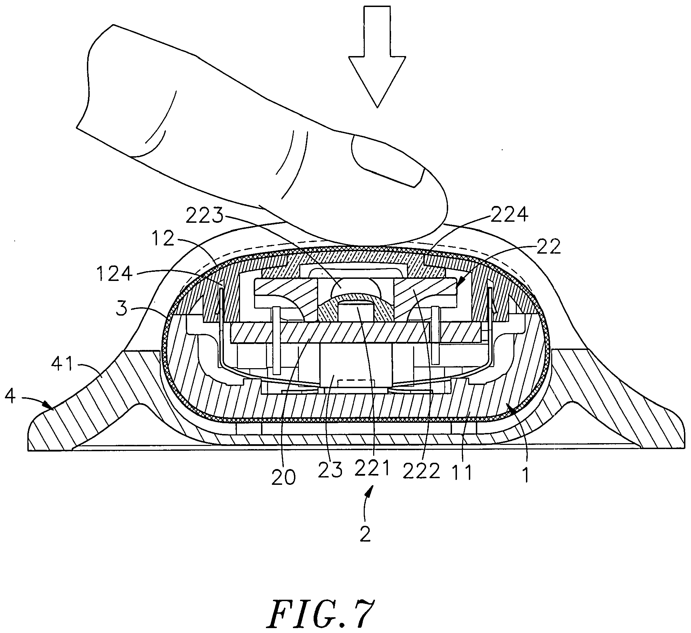

Referring to FIGS. 4~7, the cursor control device can be used in a personal computer, notebook computer, mobile telephone or any of a variety of personal electronic devices. In case of a wired design, the transmission line 241 of the transmission interface 24 of the cursor control device is connected to the communication interface means of the personal electronic device, for example, personal computer. When the user rests the wrist of the hand on a pad that is disposed adjacent to the cursor control device, the user can move the sleeve 3 in X-axis direction or Y-axis direction relative to the circuit module holder 1 and the housing 4 with the fingers. At this time, the microprocessor 21 outputs an output signal indicative of the direction and amount of movement of the sleeve 3 relative to the circuit module holder 1 through the transmission line 241 of the transmission interface 24 to the communication interface means of the computer to control movement of the cursor on the display screen. Because the circuit module holder 1 is made from a self-lubricating material, it facilitates movement of the sleeve 3, and therefore the sleeve 3 can be moved smoothly in the accommodation chamber 40 inside the housing 4 without causing much friction resistance between the sleeve 3 and the circuit module holder 1.

Further, when the user applies a downward pressure to the sleeve 3, the stop members 123 of the second holder shell 12 are lowered toward the limiters 111 of the first holder shell 11 and the elastic members 124 of the second holder shell 12 are compressed by the first holder shell 11, and at the same time the control switch 23 that is located on the bottom wall of the circuit board 20 is triggered by the first holder shell 11 to produce a triggering signal for controlling the cursor to grab a web page and to scroll up or down the web page or to click a menu selection. When the user stops from moving the sleeve 3, the elastic members 124 immediately lift the second holder shell 12 from the first holder shell 11, returning the second holder shell 12 to its former position.

Further, because the circuit module 2 is accommodated in the accommodation space 10 in the circuit module holder 1 and affixed to the second holder shell 12, the circuit module 2 is protected inside the housing 4 and does not requires an extra installation space in the personal electronic device. Therefore, the cursor control device has an integrated outer appearance and a small-size characteristic.

As stated above, the invention provides a cursor control device applicable for use in a personal computer, notebook computer, mobile telephone or any of a variety of electronic devices for moving a cursor displayed on a display screen or controlling the cursor to grab a web page and to scroll up or down the web page or to click a menu selection. The circuit module holder 1 of the cursor control device accommodates the circuit module 2 on the inside and is received in the sleeve 3 inside the housing 4. Further, two support members 5 may be used to substitute for the aforesaid housing 4 and affixed to the bottom wall of the first holder shell 11 for supporting the circuit module holder 1 on a flat wall, allowing movement of the sleeve 3 relative to the circuit module holder 1 and the circuit module 2 in X-axis and Y-axis directions. This mounting arrangement facilitates cleaning and replacement of the sleeve 3, enhancing the functioning of the cursor control device.

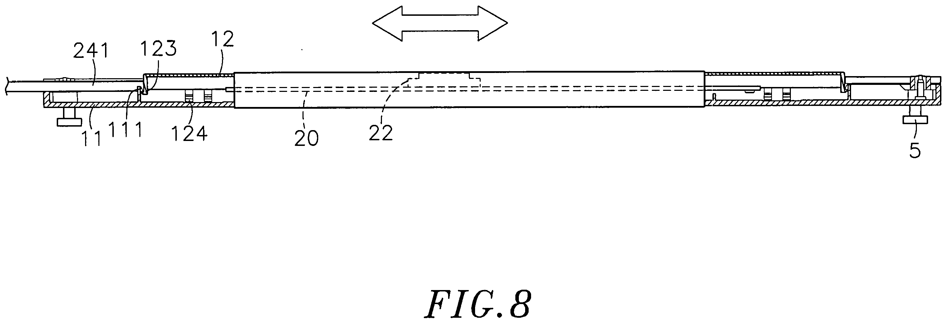

A prototype of cursor control device has been constructed with the features of FIGS. 1-8. The control device functions smoothly to provide all of the features disclosed earlier.

### LIST OF REFERENCE SYMBOLS

| Applicant: EKTOUCH CO., LTD | |
|---|---|
| Patent Title : CURSOR CONTROL DEVICE | |
| 1- circuit module holder | 121- opening |
| 10- accommodation space | 122- mounting portion |
| 11- first holder shell | 123-stop member |
| 111-limiter | 124-elastic member |
| 112-locating member | |
| 12- second holder shell | |
| 2- circuit module | 224- lens |
| 20- circuit board | 23- control switch |
| | 24-transmission interface |
| 21- microprocessor | 241- transmission line |
| 22- sensor module | 25- mounting portion |
| 221-sensor | |
| 222- substrate | |
| 223-light source | |
| 3- sleeve | 4- housing |
| | 40- accommodation chamber |
| 31- axial hole | 41- bottom shell 41- bottom shell |
| | 411-male hook member (or female hook members) |
| | 412- locating member |
| | 413-fastening member |
| | 414- protruding block |
| 4141- hole | 5- support member |
| 42-top cover shell | |
| 421- open space | |
| 422- female hook members (or male hook members) | |
| 423- locating groove | |

## Claims

1. A cursor control device adapted for controlling a cursor on a display screen of an electronic device, comprising:
a circuit module holder (1), said circuit module holder (1) having an accommodation space (10) defined therein and an opening (121) on a top side thereof for exposing said accommodation space (10);
a sleeve (3) mounted around said circuit module holder (1) and movable leftwards and rightwards relative to said circuit module holder (1) and rotatable forwards and backwards around said circuit module holder (1); and
a circuit module (2) accommodated in said accommodation space (10) of said circuit module holder (1), said circuit module (2) comprising a circuit board (20), a sensor module (22) installed in said circuit board (20) and disposed corresponding to the opening (121) of the circuit module holder (1) for sensing the direction and amount of movement of said sleeve (3) relative to said circuit module holder (1) through said opening and producing a signal indicative of the direction and amount of movement of said sleeve (3) relative to said circuit module holder (1), a microprocessor (21) installed in said circuit board (20) and electrically connected with said sensor module (22) for receiving the signal produced by said sensor module (22) and producing a control signal for controlling said cursor on said display screen subject to the signal received from said sensor module (22),
**characterized in that** said circuit module (2) further comprises a control switch (23) electrically connected with said microprocessor (21), wherein said control switch (23) is disposed inside said circuit module holder (1), installed in said circuit board (20), and movable downwards to urge against an inner wall of said circuit module holder (1) when said sleeve (3) is pressed by a user so as to produce a triggering signal.

2. The cursor control device as claimed in claim 1, **characterized in that** said circuit module holder (1) comprises:
a first holder shell (11), said first holder shell (11) having a plurality of limiters (111);
a second holder shell (12) disposed above said first holder shell (11), said second holder shell (12) having a plurality of stop members (123) downwardly extended from a bottom wall thereof and respectively aimed at said limiters (111) of said first holder shell (11); and
a plurality of elastic members (124) disposed between said first holder shell (11) and said second holder shell (12) for supporting said second holder shell (12) above said first holder shell (11),
wherein said control switch (23) is disposed on a bottom surface of said circuit board (20), and when said sleeve (3) is pressed by the user, said second holder shell (12) moves toward said first holder shell (11) while carrying said control switch (23) to move downwards to urge against said first holder shell (11), thereby producing the triggering signal.

3. The cursor control device as claimed in claim 1, **characterized in that** said circuit module holder (1) has a plurality of mounting portions (122) suspending on the inside; said circuit board (20) of said circuit module (2) has a plurality of mounting portions (122) respectively fixedly fastened to the mounting portions (122) of said circuit module holder (1).

4. The cursor control device as claimed in claim 1, **characterized in that** said circuit module (2) further comprises a transmission interface (24) electrically connected with said microprocessor (21) and adapted for transmitting said control signal to said electronic device to control said cursor on said display screen.

5. The cursor control device as claimed in claim 4, **characterized in that** said transmission interface (24) is a wired transmission interface (24) selected from a group of universal serial bus interface and PS2 keyboard/mouse interface.

6. The cursor control device as claimed in claim 4, **characterized in that** said transmission interface (24) is a wireless transmission interface (24) selected from a group of infrared, Bluetooth and radio frequency transmission techniques.

7. The cursor control device as claimed in claim 1, **characterized in that** said sensor module (22) of said circuit module (2) comprises a substrate (222), a light source (223) mounted in said substrate (222) adapted to emit light onto said sleeve (3), and a sensor (221) adapted to detect reflected light from said sleeve (3).

8. The cursor control device as claimed in claim 1, **characterized in that** said sleeve (3) defines an axial hole (31) that receives said circuit module holder (1).

9. The cursor control device as claimed in claim 1, **characterized in** further comprising a housing (4), said housing comprising a bottom shell (41), at least one top cover shell (42) covering said bottom shell (41), an accommodation chamber (40) defined in between said bottom shell (41) and said at least one top cover shell (42) for accommodating said circuit module holder (1) and said sleeve (3) for enabling said sleeve (3) to be moved relative to said circuit module holder (1), said at least one top cover shell (42) each having a plurality of locating members (112) symmetrically disposed near two distal ends thereof respectively fastened to respective locating members (112) at said circuit module holder (1) by fastening members (413).

10. The cursor control device as claimed in claim 9, **characterized in that** said bottom shell (41) has a plurality of first hook members symmetrically disposed at two opposite lateral sides, each said at least one top cover shell (42) has a plurality of second hook members respectively fastened to the male hook members (411) of said bottom shell (41).

11. The cursor control device as claimed in claim 9, **characterized in that** said bottom shell (41) of said housing (4) has two protruding blocks (414) respectively located on two distal ends thereof; said at least one top cover shell (42) of said housing (4) has two locating grooves (423) respectively coupled to the two protruding blocks (414) of said bottom shell (41).

12. The cursor control device as claimed in claim 1, **characterized in that** said circuit module holder (1) has two support members (5) fixedly fastened to a bottom wall thereof for positioning on a flat wall.

13. The cursor control device as claimed in claim 9, **characterized in that** said circuit module holder (1) is formed of a first holder shell (11) and a second holder shell (12) and shaped like a hollow bar.

14. The cursor control device as claimed in claim 9, **characterized in that** said circuit module holder (1) is prepared from a self-lubricating material selected from the group consisting of polyoxymetylene (POM), polytetrafluoroethylene (PTFE) and ultra high molecular weight polyethylene (UHMWPE).

15. The cursor control device as claimed in claim 9, **characterized in that** said sleeve (3) is prepared from one of the materials of mesh fabric and nonwoven fabric.

16. The cursor control device as claimed in claim 9, **characterized in that** said sleeve (3) is prepared from one of the materials of plastics and rubber.

17. The cursor control device as claimed in claim 9, **characterized in that** said sleeve (3) is prepared from leather.

## Patentansprüche

1. Cursorsteuerungsvorrichtung, die eingerichtet ist, einen Cursor auf einem Anzeigebildschirm einer elektronischen Vorrichtung zu steuern; aufweisend:
einen Schaltungsmodulhalter (1), wobei dieser Schaltungsmodulhalter (1) einen darin definierten Aufnahmeraum (10) und eine Öffnung (121) an einer Oberseite davon zum Freilegen des besagten Aufnahmeraums (121) besitzt;
eine Hülse (3), die um den besagten Schaltungsmodulhalter (1) befestigt ist und nach links und rechts bezüglich des besagten Schaltungsmodulhalters (1) bewegbar ist und nach vorn und hinten drehbar um den besagten Schaltungsmodulhalter (1) ist; und
ein Schaltungsmodul (2), das in dem besagten Aufnahmeraum (10) des besagten Schaltungsmodulhalters (1) aufgenommen ist, wobei dieses Schaltungsmodul (2) eine Leiterplatte (20), ein auf der besagten Leiterplatte (20) installiertes Sensormodul (22), das entsprechend der Öffnung (121) des Schaltungsmodulhalters (1) zum Sensieren der Richtung und des Bewegungsbetrags der besagten Hülse (3) gegenüber dem besagten Schaltungsmodulhalter (1) durch die besagte Öffnung und Erzeugen eines Signals, das die Richtung und den Bewegungsbetrag der besagten Hülse (3) gegenüber dem besagten Schaltungsmodulhalter (1) aufzeigt, angeordnet ist, einen Mikroprozessor (21), der auf der besagten Leiterplatte (20) installiert ist und mit dem besagten Sensormodul (22) zum Empfangen des durch das besagte Sensormodul (22) erzeugten Signals und Erzeugen eines Steuersignals zum Steuern des besagten Cursors auf dem besagten Anzeigebildschirm gemäß dem von dem besagten Sensormodul (22) empfangenen Signal elektrisch verbunden ist,
**dadurch gekennzeichnet, dass** das besagte Schaltungsmodul (2) ferner einen Steuerschalter (23) aufweist, der mit dem besagten Mikroprozessor (21) elektrisch verbunden ist, wobei dieser Steuerschalter (23) innerhalb des besagten Schaltungsmodulhalters (1) angeordnet ist, auf der Leiterplatte (20) installiert ist, und nach unten bewegbar ist, um gegen eine Innenwand des besagten Schaltungsmodulhalters (1) zu drängen, wenn die besagte Hülse (3) durch einen Benutzer gedrückt wird, um ein Auslösesignal zu erzeugen.

2. Cursorsteuerungsvorrichtung nach Anspruch 1, **dadurch gekennzeichnet, dass** der besagte Schaltungsmodulhalter (1) aufweist:
eine erste Halterungsschale (11), wobei die besagte erste Halterungsschale (11) eine Vielzahl von Begrenzern (111) aufweist;
eine zweite Halterungsschale (12), die über der besagten ersten Halterungsschale (11) angeordnet ist, wobei diese zweite Halterungsschale (12) eine Vielzahl von Anschlagselementen (123) aufweist, die sich von einer Unterwand davon nach unten erstrecken und jeweils auf die besagten Begrenzer (111) der besagten ersten Halterungsschale (11) gerichtet sind; und
eine Vielzahl von elastischen Gliedern (124), die zwischen der besagten ersten Halterungsschale (11) und der besagten zweiten Halterungsschale (12) zum Lagern der besagten zweiten Halterungsschale (12) über der besagten ersten Halterungsschale (11) angeordnet sind,
wobei der besagte Steuerschalter (23) auf einer Unterfläche der besagten Leiterplatte (20) angeordnet ist, und wenn die besagte Hülse (3) durch den Benutzer gedrückt wird, die besagte zweite Halterungsschale (12) sich hin zu der besagten ersten Halterungsschale (11) bewegt, während sie den besagten Steuerschalter (23) mitnimmt, um sich nach unten zu bewegen, um gegen die besagte erste Halterungsschale (11) zu drängen, wodurch das Auslösesignal erzeugt wird.

3. Cursorsteuerungsvorrichtung nach Anspruch 1, **dadurch gekennzeichnet, dass** der besagte Schaltungsmodulhalter (1) eine Vielzahl von Befestigungsabschnitten (122), die sich nach innen erstrecken, aufweist; die besagte Leiterplatte (20) des besagten Schaltungsmoduls (2) eine Vielzahl von Befestigungsabschnitten (122) aufweist, die jeweils fest an den Befestigungsabschnitten (122) des besagten Schaltungsmodulhalters (1) befestigt sind.

4. Cursorsteuerungsvorrichtung nach Anspruch 1, **dadurch gekennzeichnet, dass** das besagte Schaltungsmodul (2) ferner eine Übertragungsschnittstelle (24) aufweist, die elektrisch mit dem besagten Mikroprozessor (21) verbunden ist und dazu eingerichtet ist, das besagte Steuersignal an die besagte elektronische Vorrichtung zu übertragen, um den besagten Cursor auf dem besagten Anzeigebildschirm zu steuern.

5. Cursorsteuerungsvorrichtung nach Anspruch 4, **dadurch gekennzeichnet, dass** die besagte Übertragungsschnittstelle (24) eine kabelgebundene Übertragungsschnittstelle (24) ausgewählt aus einer Gruppe aus USB-Schnittstelle und PS2 Tastatur/Mausschnittstelle ist.

6. Cursorsteuerungsvorrichtung nach Anspruch 4, **dadurch gekennzeichnet, dass** besagte Übertragungsschnittstelle (24) eine Drahtlos-Übertragungsschnittstelle (24) ausgewählt aus einer Gruppe aus Infrarot, Bluetooth und Funkfrequenz-Übertragungstechniken ist.

7. Cursorsteuerungsvorrichtung nach Anspruch 1, **dadurch gekennzeichnet, dass** das besagte Sensormodul (22) des besagten Schaltungsmoduls (2) ein Substrat (222), eine auf dem Substrat (222) befestigte Lichtquelle (223), die eingerichtet ist, Licht auf die besagte Hülse (3) zu emittieren, und einen Sensor (221), der eingerichtet ist, von der besagten Hülse (3) reflektiertes Licht zu detektieren, aufweist.

8. Cursorsteuerungsvorrichtung nach Anspruch 1, **dadurch gekennzeichnet, dass** die besagte Hülse (3) eine axiale Öffnung (31) definiert, die den besagten Schaltungsmodulhalter (1) aufnimmt.

9. Cursorsteuerungsvorrichtung nach Anspruch 1, **dadurch gekennzeichnet, dass** diese ferner ein Gehäuse (4) aufweist, wobei dieses Gehäuse aufweist eine Unterschale (41), zumindest eine obere Deckelschale (42), welche die besagte Unterschale (41) bedeckt, eine Aufnahmekammer (40), die zwischen der besagten Unterschale (41) und der besagten zumindest einen oberen Deckelschale (42) zur Aufnahme des besagten Schaltungsmodulhalters (1) und der besagten Hülse (3) angeordnet ist, um es der besagten Hülse (3) zu gestatten, gegenüber dem besagten Schaltungsmodulhalter (1) bewegt zu werden, wobei die besagte zumindest eine obere Deckelschale (42) jeweils eine Vielzahl von Platzierungsgliedern (112) aufweist, die symmetrisch nahe zweier distaler Enden davon angeordnet sind, die jeweils an den jeweiligen Platzierungsgliedern (112) an dem besagten Schaltungsmodulhalter (1) durch Befestigungsglieder (413) befestigt sind.

10. Cursorsteuerungsvorrichtung nach Anspruch 9, **dadurch gekennzeichnet, dass** die besagte Unterschale (41) eine Vielzahl von ersten Hakengliedern aufweist, die symmetrisch an zwei gegenüberliegenden seitlichen Seiten angeordnet sind, jede der besagten zumindest einen oberen Deckelschale (42) eine Vielzahl von zweiten Hakengliedern aufweist, die jeweils an den männlichen Hakengliedern (411) der besagten Unterschale (41) befestigt sind.

11. Cursorsteuerungsvorrichtung nach Anspruch 9, **dadurch gekennzeichnet, dass** die besagte Unterschale (41) des besagten Gehäuses (4) zwei vorstehende Blöcke (414) aufweist, die jeweils an zwei distalen Enden davon angeordnet sind; die besagte zumindest eine obere Deckelschale (42) des besagten Gehäuses (4) zwei Platzierungsnuten (423) besitzt, die jeweils an die zwei vorstehenden Blöcke (414) der besagten Unterschale (41) gekoppelt sind.

12. Cursor-Steuerungsvorrichtung nach Anspruch 1, **dadurch gekennzeichnet, dass** der besagte Schaltungshalter (1) zwei Stützglieder (5) aufweist, die fest an einer Unterwand davon zur Positionierung an einer flachen Wand befestigt sind.

13. Cursorsteuerungsvorrichtung nach Anspruch 9, **dadurch gekennzeichnet, dass** der besagte Schaltungsmodulhalter (1) aus einer ersten Halterschale (11) und einer zweiten Halterschale (12) gebildet ist und wie eine Hohlstange geformt ist.

14. Cursorsteuerungsvorrichtung nach Anspruch 9, **dadurch gekennzeichnet, dass** der besagte Schaltungsmodulhalter (1) hergestellt ist aus einem selbstschmierenden Material ausgewählt aus der Gruppe bestehend aus Polyoxymethylen (POM), Polytetrafluorethylen (PTFE) und Polyethylen mit ultra-hoher Molekularmasse (UHMWPE).

15. Cursor-Steuerungsvorrichtung nach Anspruch 9, **dadurch gekennzeichnet, dass** die besagte Hülse (3) aus einem der Materialien Netzstoff und Vliesstoff hergestellt ist.

16. Cursor-Steuerungsvorrichtung nach Anspruch 9, **dadurch gekennzeichnet, dass** die besagte Hülse (3) aus einem der Materialien Plastik und Gummi hergestellt ist.

17. Cursor-Steuerungsvorrichtung nach Anspruch 9, **dadurch gekennzeichnet, dass** die besagte Hülse (3) aus Leder hergestellt ist.

## Revendications

1. Dispositif de commande de curseur conçu pour commander un curseur sur un écran d'affichage d'un dispositif électronique, comprenant :
un dispositif de support (1) de module de circuit, ledit dispositif de support (1) de module de circuit comportant un espace de réception (10) défini à l'intérieur de ce dernier et une ouverture (121), située sur son côté supérieur, permettant l'accès audit espace de réception (10) ;
un manchon (3) monté autour dudit dispositif de support (1) de module de circuit et pouvant être déplacé vers la gauche et vers la droite par rapport audit dispositif de support (1) de module de circuit de même que pouvant pivoter vers l'avant et vers l'arrière autour dudit dispositif de support (1) de module de circuit ; et
un module de circuit (2) logé dans ledit espace de réception (10) dudit dispositif de support (1) de module de circuit, ledit module de circuit (2) comprenant une carte de circuits imprimés (20), un module capteur (22) installé dans ladite carte de circuits imprimés (20) et disposé en correspondance avec l'ouverture (121) du dispositif de support (1) de module de circuit de façon à détecter le sens et la quantité de déplacement dudit manchon (3) par rapport audit dispositif de support (1) de module de circuit à travers ladite ouverture et à produire un signal indiquant le sens et la quantité de déplacement dudit manchon (3) par rapport audit dispositif de support (1) de module de circuit, un microprocesseur (21) installé dans ladite carte de circuits imprimés (20) et connecté électriquement audit module capteur (22) de façon à recevoir le signal produit par ledit module capteur (22) et à produire un signal de commande permettant de commander ledit curseur sur ledit écran d'affichage en fonction du signal reçu dudit module capteur (22),
**caractérisé en ce que** ledit module de circuit (2) comprend en outre un commutateur de commande (23) connecté électriquement audit microprocesseur (21), dans lequel ledit commutateur de commande (23) est disposé à l'intérieur dudit dispositif de support (1) de module de circuit, installé dans ladite carte de circuits imprimés (20), et peut se déplacer vers le bas pour pousser contre une paroi intérieure dudit dispositif de support (1) de module de circuit lorsqu'un utilisateur appuie sur ledit manchon (3) de façon à produire un signal de déclenchement.

2. Dispositif de commande de curseur selon la revendication 1, **caractérisé en ce que** ledit dispositif de support (1) de module de circuit comprend :
une première coque (11) de dispositif de support, ladite première coque (11) de dispositif de support comportant plusieurs limiteurs (111) ;
une seconde coque (12) de dispositif de support disposée au-dessus de ladite première coque (11) de dispositif de support, ladite seconde coque (12) de dispositif de support comportant plusieurs éléments de butée (123) s'étendant vers le bas de sa paroi inférieure et pointant respectivement au niveau desdits limiteurs (111) de ladite première coque (11) de dispositif de support ; et
plusieurs éléments élastiques (124) disposés entre ladite première coque (11) de dispositif de support et ladite seconde coque (12) de dispositif de support de façon à supporter ladite seconde coque (12) de dispositif de support au-dessus de ladite première coque (11) de dispositif de support,
dans lequel ledit commutateur de commande (23) est disposé sur une surface inférieure de ladite carte de circuits imprimés (20) et, lorsque l'utilisateur appuie sur ledit manchon (3), ladite seconde coque (12) de dispositif de support est déplacée vers ladite première coque (11) de dispositif de support tout en transportant ledit commutateur de commande (23) de sorte qu'il se déplace vers le bas pour pousser contre ladite première coque (11) de dispositif de support, produisant ainsi le signal de déclenchement.

3. Dispositif de commande de curseur selon la revendication 1, **caractérisé en ce que** ledit dispositif de support (1) de module de circuit comporte plusieurs parties de montage (122) suspendues à l'intérieur ; ladite carte de circuits imprimés (20) dudit module de circuit (2) comporte plusieurs parties de montage (122) fixées respectivement à demeure aux parties de montage (122) dudit dispositif de support (1) de module de circuit.

4. Dispositif de commande de curseur selon la revendication 1, **caractérisé en ce que** ledit module de circuit (2) comprend en outre une interface de transmission (24) connectée électriquement audit microprocesseur (21) et conçue pour transmettre ledit signal de commande audit dispositif électronique de façon à commander ledit curseur sur ledit écran d'affichage.

5. Dispositif de commande de curseur selon la revendication 4, **caractérisé en ce que** ladite interface de transmission (24) est une interface de transmission câblée (24) sélectionnée dans un groupe constitué par une interface bus série universel et une interface clavier/souris PS2.

6. Dispositif de commande de curseur selon la revendication 4, **caractérisé en ce que** ladite interface de transmission (24) est une interface de transmission sans fil (24) sélectionnée dans un groupe de techniques constitué par des techniques de transmission par infrarouge, Bluetooth et radiofréquence.

7. Dispositif de commande de curseur selon la revendication 1, **caractérisé en ce que** ledit module capteur (22) dudit module de circuit (2) comprend un substrat (222), une source de lumière (223) montée dans ledit substrat (222), conçue pour émettre de la lumière sur ledit manchon (3), et un capteur (221) conçu pour détecter une lumière réfléchie à partir dudit manchon (3).

8. Dispositif de commande de curseur selon la revendication 1, **caractérisé en ce que** ledit manchon (3) définit un trou axial (31) qui reçoit ledit dispositif de support (1) de module de circuit.

9. Dispositif de commande de curseur selon la revendication 1, **caractérisé en ce qu'**il comprend en outre un boîtier (4), ledit boîtier comprenant une coque inférieure (41), au moins une coque supérieure de recouvrement (42) recouvrant ladite coque inférieure (41), une chambre de réception (40), définie entre ladite coque inférieure (41) et lesdites au moins une coque de recouvrement supérieure (42), destinée à recevoir ledit dispositif de support (1) de module de circuit et ledit manchon (3) de façon à permettre un déplacement dudit manchon (3) par rapport audit dispositif de support (1) de module de circuit, lesdites au moins une coque supérieure de recouvrement (42) comportant chacune plusieurs éléments de positionnement (112) disposés symétriquement à proximité de leurs deux extrémités distales, fixés respectivement à des éléments de positionnement respectifs (112) au niveau dudit dispositif de support (1) de module de circuit par des éléments de fixation (413).

10. Dispositif de commande de curseur selon la revendication 9, **caractérisé en ce que** ladite coque inférieure (41) comporte plusieurs premiers éléments crochets disposés symétriquement au niveau de deux côtés latéraux opposés, chacune desdites au moins une coque supérieure de recouvrement (42) comporte plusieurs seconds éléments crochets fixés respectivement aux éléments crochets mâles (411) de ladite coque inférieure (41).

11. Dispositif de commande de curseur selon la revendication 9, **caractérisé en ce que** ladite coque inférieure (41) dudit boîtier (4) comporte deux blocs en saillie (414) situés respectivement au niveau de ses deux extrémités distales ; lesdites au moins une coque supérieure de recouvrement (42) dudit boîtier (4) comportent deux rainures de positionnement (423) couplées respectivement aux deux blocs en saillie (414) de ladite coque inférieure (41).

12. Dispositif de commande de curseur selon la revendication 1, **caractérisé en ce que** ledit dispositif de support (1) de module de circuit comporte deux éléments de support (5) fixés à demeure à sa paroi inférieure à des fins de positionnement sur une paroi plate.

13. Dispositif de commande de curseur selon la revendication 9, **caractérisé en ce que** ledit dispositif de support (1) de module de circuit est formé d'une première coque (11) de dispositif de support et d'une seconde coque (12) de dispositif de support et est formé de façon similaire à une barre creuse.

14. Dispositif de commande de curseur selon la revendication 9, **caractérisé en ce que** ledit dispositif de support (1) de module de circuit est préparé à partir d'un matériau autolubrifiant choisi dans le groupe constitué par du polyoxyméthylène (POM), du polytétrafluoroéthylène (PTFE) et du polyéthylène à ultra haut poids moléculaire (UHMWPE).

15. Dispositif de commande de curseur selon la revendication 9, **caractérisé en ce que** ledit manchon (3) est préparé à partir de l'un des matériaux constitués d'une toile tissée et d'une toile non tissée.

16. Dispositif de commande de curseur selon la revendication 9, **caractérisé en ce que** ledit manchon (3) est préparé à partir de l'une des matières constituées de matière plastique et de caoutchouc.

17. Dispositif de commande de curseur selon la revendication 9, **caractérisé en ce que** ledit manchon (3) est préparé à partir de cuir.
